# EUROPEAN PATENT SPECIFICATION

(11) **EP 1 177 842 B1**
(45) Date of publication and mention of the grant of the patent: **15.11.2006**
(21) Application number: 01830514.4
(22) Date of filing: 02.08.2001
(51) Int. Cl.: B08B 15/02, F16L 5/00

(54) **An apparatus used to fix kitchen hoods to the ceiling**
Vorrichtung zum Befestigen von Dunstabzugshauben an der Decke
Dispositif pour fixer des hottes d'aspiration au plafond

(30) Priority: 04.08.2000 IT AN000022 U
(43) Date of publication of application: 06.02.2002
(73) Proprietor: Sirius S.P.A., 60041 Sassoferrato (AN) (IT)
(72) Inventor: Canavari, Bruno, 60044 Fabriano (AN) (IT)
(74) Representative: Baldi, Claudio

(56) References cited:
- EP-A- 0 974 790
- DE-U- 29 914 232
- GB-A- 2 156 473
- US-A- 3 596 936
- US-A- 4 011 803

## Description

The present patent application relates to an apparatus used to fix kitchen hoods to the ceiling.

As it is known, modern modular kitchens very often include blocks located in the centre of the room with the main household appliances, such as the sink with dishwasher and the cooker under large hoods equipped with powerful aspiration units that convey the fumes, vapours and odours originated from cooking towards the outside or purify them.

In these cases a special apparatus must be used to hang the hood to the ceiling, since the traditional hooks or fixing screws used for wall-mounted hoods have proved not suitable for this particular application.

Today, ceiling hoods are normally equipped with a bearing structure, usually made of sheet metal. The hood is hung to the base of the structure and the chimney is inserted into the structure, which has a tubular shape, mostly with quadrangular or round section, according to the model. A ceiling hood of this type is described in EP 0974790.

In any case, the structure is always closed on top by a sheet metal plate with a large central hole used to insert the chimney of the hood and with a perimeter series of small holes used to insert fixing screws to be tightened to corresponding plugs inserted into the ceiling.

Close to the top, the lateral walls of the structure have some wide openings through which the operator can insert his hands to place and tighten the fixing screws into the holes located on the sheet metal plate that is engaged against the surface of the ceiling.

Once it has been anchored to the ceiling, the structure can be hidden with a sliding pipe, telescopically coupled to another pipe, inserted on the outside of the structure and placed on the hood.

More precisely, two tubular liners are inserted on the outside of the bearing structure. One of them is free to move downwards until it touches the hood anchored at the base of the structure and rests on it. For this reason, the lower section of the structure is always hidden inside the first liner.

The upper section of the structure, instead, is hidden inside a second tubular liner, telescopically coupled with the first liner. The second tubular liner is held in the maximum lifting position by means of one or more screws usually located above the liner and fitting into corresponding holes located on the bearing structure.

Obviously, the second liner is lowered during the installation or disinstallation of the bearing structure in order to show the lateral openings through which the operator can access the space below the sheet metal plate with the screws used to fix the structure to the ceiling.

Once the installation or disinstallation of the hood has been completed, the operator holds the second liner and makes it slide upwards until it touches the ceiling, in order to hide the lower section of the bearing structure.

From the description above it appears evident that, during the tightening or loosening of the fixing screws of the structure, it is necessary to balance the entire weight of the structure and hood, since the sheet metal plate that closes the top of the structure is an integral part of the structure, with no possibility of detachment.

For this reason, at least two operators are needed, the first one to hold the hood and the second one to tighten the fixing screws of the structure.

In view of this fact, it has been decided to make installation and disinstallation operations easier and simpler, so that they can be carried out by only one operator. The abovementioned aim is achieved by means of an apparatus for fixing ceiling kitchen hoods according to claim 1.

In this perspective, it has been devised to separate the sheet metal plate from the structure and provide it with fast coupling and uncoupling means designed to co-operate with corresponding means located on the top of the structure.

In this way, the sheet metal plate can be easily and comfortably screwed into the ceiling to hang the structure with the hood and vice versa.

For major clarity the description of the apparatus according to the present invention continues with reference to the enclosed drawings, which are intended for purposes of illustration and not in a limiting sense, whereby:
- Fig. 1 is an axonometric view of the apparatus according to the present invention;
- Fig. 2 is an enlarged view of a detail of Fig. 1;

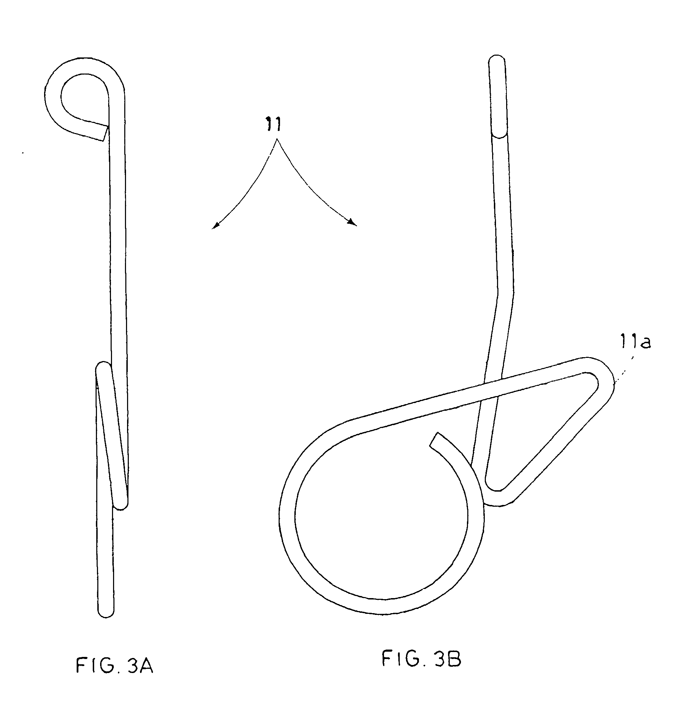

- Figs. 3A and 3B are two views with different angles of the same component, being an integral part of the apparatus according to the present invention.

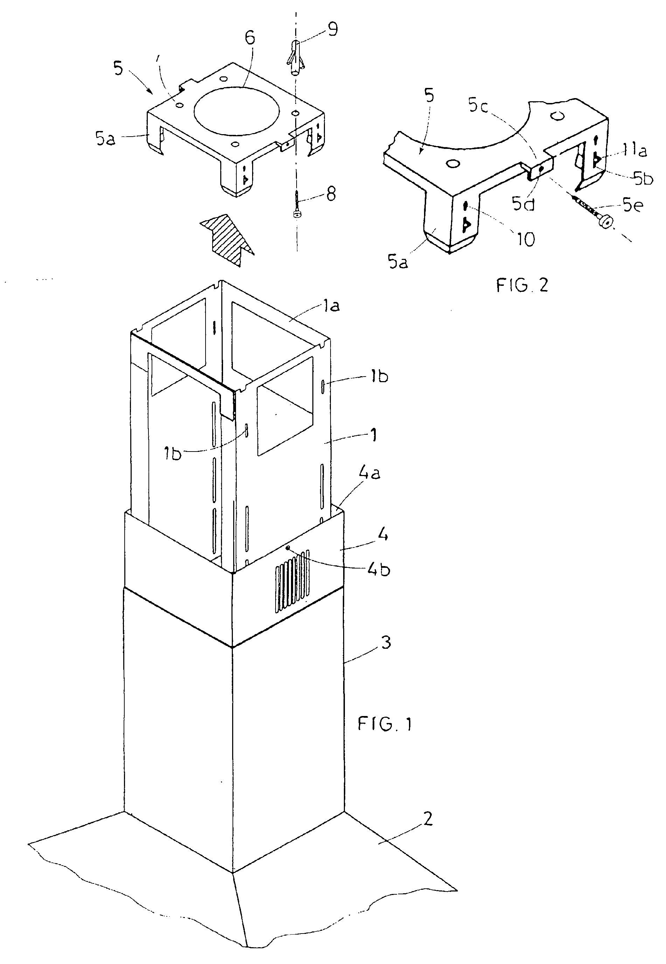

With reference to Fig. 1, the apparatus according to the present invention comprises a bearing structure (1) with tubular shape, at whose base the hood (2) is hung. On the outside of the structure (1) two tubular liners are inserted, of which one (3) is free to move downwards until it touches the hood (2) and rests on it, in order to hide the lower section of the structure (1), whose upper section is hidden by the second tubular liner (4) that is telescopically coupled with the first liner (3).

The apparatus according to the present invention also comprises a plate (5) with a large central hole (6) and a perimeter series of small holes (7) for corresponding fixing screws (8) to be screwed into plugs (9) inserted into the ceiling.

The main characteristic of the apparatus according to the present invention is represented by the fact that, although being separate from the structure (1), the shape of the plate (5) is such that it can be perfectly housed inside the opening of the structure (1) to which the plate (5) self-fits by means of suitable fixing means located on the plate (5).

In the preferred embodiment shown in Fig. 1, the plate (5) has a square shape and four box-type feet (5a) in the four corners, designed to be exactly fitted inside the four corners of the upper opening (1a) of the tubular structure (1) with square section.

A special spring (11) is fixed inside each foot (5a) by means of a screw (10). The spring (11) has a wedge-shaped section (11a) inserted into a slot (5b) of the foot (5a) and protruding from the foot (5a).

The upper opening (1a) of the structure (1) has four slots (1b) designed to receive the wedge-shaped section (11a) of the spring (11).

More precisely, after uncoupling the plate (5) from the structure (1), the operator can place the structure (1) and the hood (2) on the floor and fix the plate (5) to the ceiling.

Once the four screws (8) have been tightened, the operator can take the structure (1) and hold it against the ceiling in order to place the four legs (5a) of the plate (5) into the upper opening (1a) of the structure (1).

When the sections (11a) of the springs (11) touch the internal surface of the four corners of the upper opening (1a), they move backwards inside the legs (5a), from which they are ejected as soon as the slots (1b) are exactly positioned before the slots (5b).

In other words, the sections (11a) automatically fit inside the slots (1b), connecting the plate (5) with the structure (1).

During the disinstallation of the hood, the operator will only need to extract the structure (1) from the plate (5) after extracting the sections (11a) of the springs (11) from the fixing slots (1b). After that, once the hood (2) has been placed on the floor, if necessary, the operator can comfortably loosen the screws (8) to detach the plate (5) from the ceiling.

Finally, it must be said that the plate (5) has at least a perimeter tab (5c) provided with a small hole (5d) in which the screw (5e) used to hold the tubular liner (4) that hides the upper section of the structure (1) is tightened.

The tubular liner (4) has at least a small hole (4b) on the upper opening (4a), used to tighten the screw (5e).

## Claims

1. An apparatus for fixing ceiling kitchen hoods of the type comprising:
- a bearing structure (1) with tubular shape, at whose base the hood (2) is hung, while on the outside of the structure (1) two tubular liners (3 and 4) are inserted and mutually coupled telescopically;
- a plate (5) which features a central hole (6) and a perimeter series of holes (7) for corresponding fixing screws (8) to be screwed into plugs (9);
**characterised by** the fact that plate (5) is not an integral part of the bearing structure (1) and has a shape such that it can be housed inside a top opening (1a) of the structure (1) and is provided with four box-type feet (5a) designed to be fitted inside the top opening (1a) of the structure (1) each foot (5a) being provided with a spring (11), said spring (11) being fixed **inside** each respective foot (5a) by means of a screw (10) which has a wedge-shaped section (11a) inserted into a slot (5b) of the foot (5a) and protruding from the foot (5a), capable of self-fitting into a corresponding slot (1b) located at the top opening (1a) of the structure (1).

2. An apparatus according to the previous claim, wherein the plate (5) has a square shape and four box-type feet (5a) in the four corners designed to be inside said top opening (1a) of the structure (1) with square section.

## Patentansprüche

1. Werkzeug zur Befestigung von Decken-Abzugshauben, welches folgendes umfasst:
- einen rohrförmigen Tragebalken (1), an dessen Basis die eigentliche Abzugshaube (2) aufgehängt ist, während an der Außenseite des Tragebalkens (1) zwei rohrförmige Ummantelungen (3 und 4) eingesteckt sind, die teleskopartig miteinander verbunden sind;
- eine Scheibe (5) mit einem Loch (6) in der Mitte und einer Reihe von umlaufenden Löchern (7) für ebenso viele Befestigungsschrauben (8), die in entsprechende Dübel (9) eingeschraubt werden;
**dadurch gekennzeichnet, dass** die Scheibe (5) kein Bestandteil des Tragebalkens (1) ist und dank ihrer Form in einer oberen Tülle (1 a) des Tragebalkens (1) Aufnahme findet und vier kastenartige Füßchen (5a) besitzt, welche dazu geeignet sind, in die Tülle (1 a) des Tragebalkens (1) eingefügt zu werden, wobei jedes Füßchen (5a) mit einer Feder (11) ausgestattet ist, die innerhalb des jeweiligen Füßchens (5a) mittels einer Schraube (10) befestigt ist, welche einen keilförmigen Abschnitt (11a) aufweist, der in einen Schlitz (5b) des Füßchens (5a) eingesteckt ist und aus dem Füßchen (5a) hervorsteht und welcher außerdem dazu geeignet ist, sich selbsttätig in einen entsprechenden Schlitz (1 b) einzuhängen, der zu diesem Zweck an der oberen Tülle (1 a) des Tragebalkens (1) vorgesehen ist.

2. Werkzeug entsprechend dem vorstehenden Anspruch, wobei die Scheibe (5) eine quadratische Form aufweist und vier Füßchen (5a) an den vier Ecken besitzt, welche dazu geeignet sind, sich exakt in die Tülle (1a) des rohrförmigen Tragebalkens (1) mit ebenfalls quadratischem Querschnitt einzufügen.

## Revendications

1. Outillage pour la fixation de hottes à plafond, du type comprenant :
- un treillage portant (1), ayant structure tubulaire, à la base duquel la hotte (2) est suspendue, tandis qu'à l'externe du dit treillage (1), deux chemises tubulaires (3 et 4), couplées de manière télescopique entre elles, sont enfilées ;
- un disque (5), présentant un trou central (6) et une série de trous (7) sur le périmètre, pour d'autant de vis de fixation (8) à visser dans des bouchons (9) correspondants ;
**caractérisé en ce que** le dit disque (5), qui n'est pas une partie intégrante du treillage (1), présente une forme telle à se loger dans une embouchure supérieure (1a) du treillage (1) et **en ce qu'**il est doté de quatre pieds en forme de boîtiers (5a) aptes à se loger dans la dite embouchure (1a), chacun de ces pieds étant doté d'un ressort (11) fixé à l'intérieur du respectif pied (5a) au moyen d'une vis (10), cette dernière présentant un segment façonné en forme de coin (11a), enfilé dans une fente (5b) du pied (5a) et débordant à l'extérieur du dit pied, étant le dit segment également apte à auto s'accrocher dans une fente (1 b) correspondante et prévue à cet effet en correspondance de l'embouchure supérieure (1 a) du treillage (1).

2. Outillage selon la revendication précédente, où le dit disque (5) présente une forme carrée et quatre pieds (5a) aux quatre angles, pieds aptes à s'enfiler exactement dans la dite embouchure (1a) du treillage tubulaire (1), ayant lui aussi une section carrée.
